# EUROPEAN PATENT APPLICATION

(11) **EP 4 622 091 A1**
(43) Date of publication of application: **24.09.2025**
(21) Application number: 25161265.1
(22) Date of filing: 03.03.2025
(51) Int. Cl.: H02P 6/08, B60J 7/057, E05F 15/695

(54) **MOTOR CONTROL DEVICE**

(30) Priority: 22.03.2024 JP 2024046251
(71) Applicant: Mitsuba Corporation, Kiryu-shi, Gunma 376-8555 (JP)
(72) Inventor: Irisawa, Kazuki, Kiryu-shi, Gunma 376-8555 (JP)
(74) Representative: Becker Kurig & Partner Patentanwälte mbB

(57) **Abstract**

[Issue] Provided is a motor control device that can more appropriately control the drive motor by suppressing torque insufficiency even during the steady-state operation period, so that the opening and closing body of the vehicle operates smoothly.

[Solution] A motor control device (50) controls a drive motor (60) connected with an opening and closing body (13) of a vehicle (10) and provided for automatically opening and closing the opening and closing body (13). The motor control device includes: an output detection unit (514), detecting an output of the drive motor (60) in accordance with an operation state of the opening and closing body (13); and a mode switching unit (518), switching a control mode of the drive motor (60) to a sine wave drive mode or a rectangular wave drive mode based on a judgment value obtained from an output result of the output detection unit (514).

## Description

### BACKGROUND

### Technical Field

The disclosure relates to a motor control device for controlling a drive motor to automatically open and close an opening and closing body of a vehicle.

### Description of Related Art

Conventionally, there are opening and closing bodies, such as sliding doors provided in vehicles, configured to be automatically opened and closed by a drive motor. For the motor control devices that control the drive motor to automatically open and close the opening and closing body, there are devices that adopt a sine wave drive mode using a sine wave signal, and devices that adopt a rectangular wave drive mode using a rectangular wave signal.

Patent Document 1 describes controlling the motor with rectangular wave control at the start of the motor, and during steady-state operation of the motor, controlling the drive power according to the rotation angle of the motor to be optimal sine wave power.

### [Prior Art Document(s)]

### [Patent Document(s)]

[Patent Document 1] Japanese Patent No. 6939447

### SUMMARY

### [Issues to be solved by the invention]

As described above, in the invention related to Patent Document 1, at the start of operation of the sliding door, the drive motor is started with a rectangular wave drive mode (rectangular wave control mode), and during steady-state operation, the drive motor is driven with a sine wave drive mode (sine wave control mode). Accordingly, it is possible to suppress torque insufficiency at the start of operation of the opening and closing body such as a sliding door, making it easier to operate the opening and closing body smoothly.

Additionally, by driving the drive motor with the sine wave drive mode during steady-state operation, there is a benefit of being able to suppress the operating sound of the drive motor. However, even during the steady-state operation period of the drive motor, there is a risk of torque insufficiency of the drive motor depending on the operation state of the opening and closing body.

However, the invention related to Patent Document 1 does not consider torque insufficiency during the steady-state operation period of the drive motor. Therefore, there is a risk that the opening and closing body may not operate smoothly due to torque insufficiency of the drive motor during the steady-state operation period of the drive motor.

An objective of the disclosure is to provide a motor control device that can more appropriately control the drive motor by suppressing torque insufficiency even during the steady-state operation period, so that the opening and closing body of the vehicle operates smoothly.

### [Means for solving the issues]

An aspect of the disclosure provides a motor control device. The motor control device controls a drive motor connected with an opening and closing body of a vehicle and provided for automatically opening and closing the opening and closing body. The motor control device includes: an output detection unit, detecting an output of the drive motor in accordance with an operation state of the opening and closing body; and a mode switching unit, switching a control mode of the drive motor to a sine wave drive mode or a rectangular wave drive mode based on a judgment value obtained from an output result obtained by the output detection unit.

### [Inventive effects]

According to the motor control device of the disclosure, the drive motor can be controlled more appropriately by suppressing torque insufficiency even during the steady-state operation period. Therefore, the opening and closing body of the vehicle can be operated more smoothly while the operating sound can be suppressed.

### BRIEF DESCRIPTION OF THE DRAWINGS

FIG. 1 is a side view showing a schematic configuration example of a vehicle equipped with a motor control device according to Embodiment 1.
FIG. 2 is a plan view showing a configuration example of a vehicle opening and closing body control device including the motor control device according to Embodiment 1.
FIG. 3 is a front view showing a configuration example of a drive unit included in the vehicle opening and closing body control device.
FIG. 4 is a perspective view showing a configuration example of a drum included in the drive unit.
FIG. 5 is a schematic diagram showing a configuration example of main components of the motor control device according to Embodiment 1.
FIG. 6 is a diagram describing the transition between a startup operation period and a steady-state operation period.
FIG. 7 is a flowchart showing an example of a control method for the drive motor by the motor control device according to Embodiment 1.
FIG. 8 is a schematic diagram showing a relationship between changes in the output duty of the drive motor and the switching state of the control mode.
FIG. 9 is a flowchart showing an example of a control method for the drive motor by the motor control device according to Embodiment 2.
FIG. 10 is a flowchart showing an example of a control method for the drive motor by the motor control device according to Embodiment 3.
FIG. 11 is a diagram showing an example of a relationship between a door position of the sliding door and a target speed.

### DESCRIPTION OF THE EMBODIMENTS

The following describes in detail the embodiments of the disclosure with reference to the drawings.

### (Embodiment 1)

### <Overview of the power sliding door device>

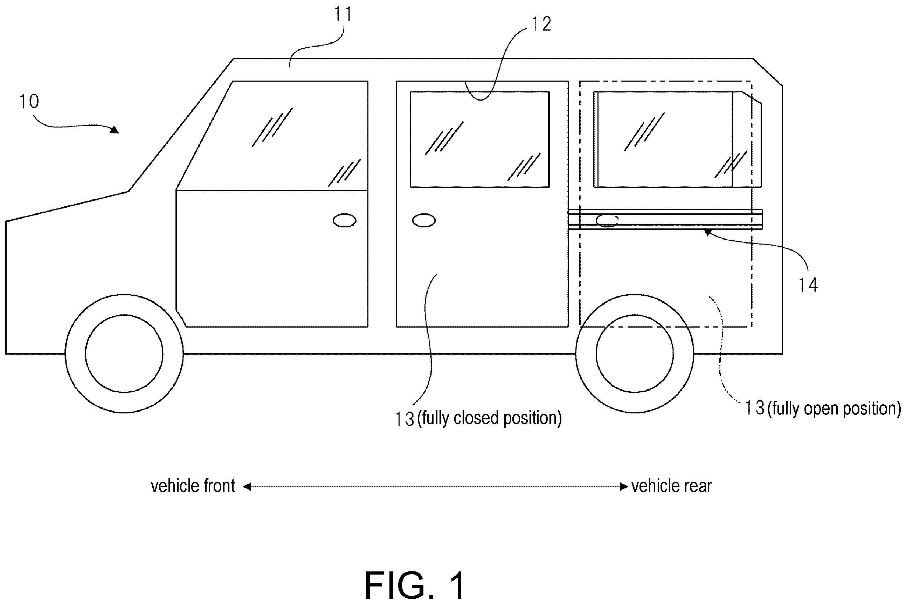

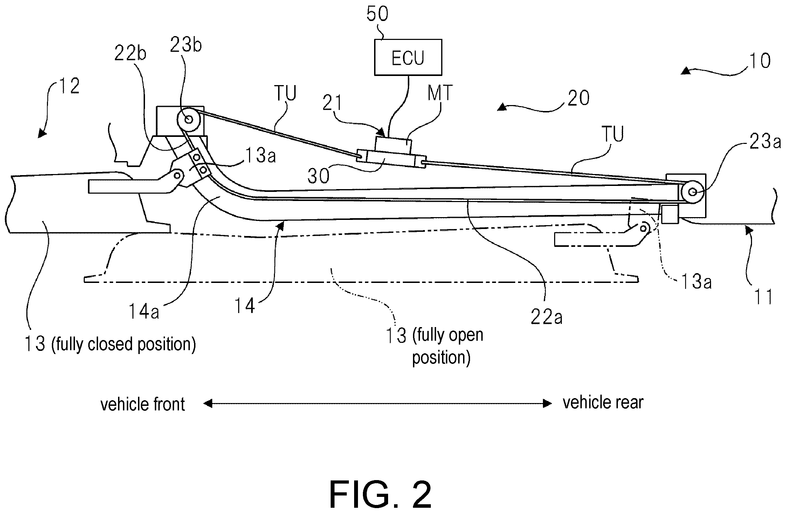

FIG. 1 is a side view showing a schematic configuration example of a vehicle equipped with a power sliding door device according to an embodiment of the disclosure. FIG. 2 is a plan view showing a configuration example of a power sliding door device in FIG. 1.

A vehicle 10 shown in FIG. 1 is, for example, a one-box vehicle. A sliding door (opening and closing body) 13 is provided on a side of the vehicle body 11 forming the vehicle 10. The sliding door 13 opens and closes an opening 12 along a guide rail 14. As shown in FIG. 2, a roller assembly 13a is connected to the sliding door 13. The roller assembly 13a moves along the guide rail 14 fixed to the side of the vehicle body 11 together with the sliding door 13.

As a result, as shown in FIG. 1 and FIG. 2, the sliding door 13 opens and closes the opening 12 by moving in the front-rear direction of the vehicle 10 between "fully closed position" and "fully open position". Here, as shown in FIG. 2, an inlet part 14a curved toward the inner side of a vehicle compartment (upper side in the figure) is provided in a portion of the guide rail 14 on a vehicle front side. By guiding the roller assembly 13a into the inlet part 14a, the sliding door 13 closes the opening 12 and is accommodated in the same surface with respect to the side surface of the vehicle body 11. In detail, in addition to the guide rail 14 provided at the central part of the vehicle body 11, guide rails (not shown) are also provided in the upper and lower parts of the vehicle body 11.

As shown in FIG. 2, the vehicle 10 is mounted with a power sliding door device (vehicle opening and closing body control device) 20 that automatically opens and closes the sliding door 13. The power sliding door device 20 is, in the example, a cable-type opening and closing device, and includes a drive unit 21 having a drive motor 60, an opening side cable 22a, a closing side cable 22b, and an electronic control unit (ECU) 50 as a motor control device. The drive unit 21 is located, for example, in the vehicle compartment of the vehicle body 11 and approximately in at central part along the extension direction of the guide rail 14, and drives the sliding door 13 to open and close by using the drive motor 60. The ECU 50 controls the rotation of this drive motor 60. The motor control device (ECU) 50 will be described in detail later.

The opening side cable 22a and the closing side cable 22b are connected to the sliding door 13 both via the roller assembly 13a, and are responsible for transmitting the power of the drive unit 21 to the sliding door 13. Specifically, the opening side cable 22a is pulled into the drive unit 21 through a first reversing pulley 23a located on the rear side of the vehicle 10, and the closing side cable 22b is pulled into the drive unit 21 through a second reversing pulley 23b located on the front side of the vehicle 10. Accordingly, the drive unit 21 drives the sliding door 13 in the opening direction by winding the opening side cable 22a, and drives the sliding door 13 in the closing direction by winding the closing side cable s22b.

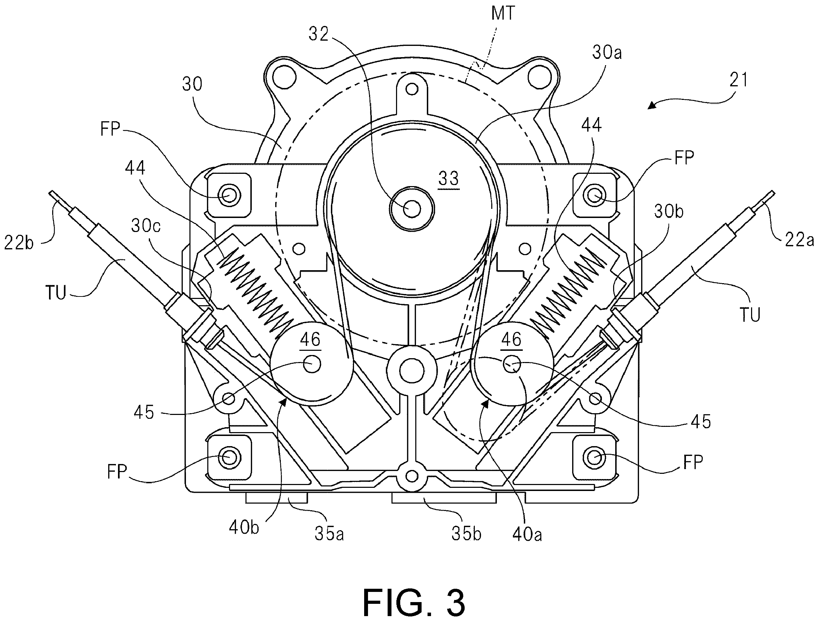

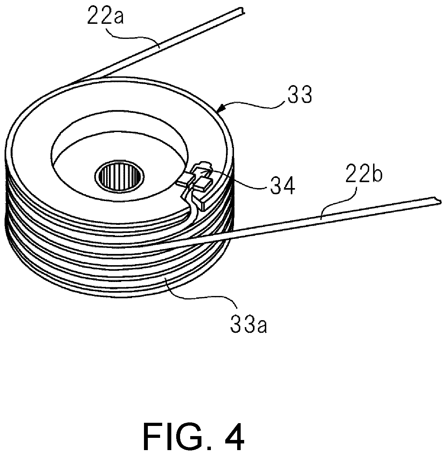

FIG. 3 is a front view showing an example configuration of the drive unit in FIG. 2, and FIG. 4 is a perspective view showing an example configuration of the drum in FIG. 3. The drive unit 21 shown in FIG. 3 includes a case 30 made of resin material such as plastic. The case 30 also functions as a frame that supports each component and mechanism forming the drive unit 21. The drive unit 21 is fixed to the vehicle body 11 (see FIG. 1 and FIG. 2) by using bolts, etc., (not shown) through four fixed parts FP provided on the case 30.

The case 30 is provided with the drive motor 60 that serves as the power source for the drive unit 21. The drive motor 60 is, for example, a flat-shaped brushless motor capable of rotating in both forward and reverse directions. By using a brushless motor as the drive motor 60, it is possible to suppress the increase in the thickness dimension of the drive unit 21. Inside the case 30 and in the vicinity of the drive motor 60, a deceleration mechanism (not shown) formed by a planetary gear reducer is provided. The deceleration mechanism decelerates the rotation of the drive motor 60 at a predetermined ratio to increase torque, and rotates the output shaft 32 with the high-torque driving force. In addition, in the approximate center part of the case 30, a drum accommodation chamber 30a formed in an approximately cylindrical shape is provided. The drum accommodation chamber 30a is positioned coaxially with respect to the drive motor 60, and a drum 33 is rotatably accommodated inside in the drum accommodation chamber 30a.

The drum 33, as shown in FIG. 4, is formed in an approximately cylindrically columnar shape with a spiral guide groove 33a on the outer circumferential surface, and the axis of the drum 33 is fixed to the output shaft 32 protruding into the drum accommodation chamber 30a. An end of the opening side cable 22a (and similarly for the closing side cable 22b) is fixed to the drum 33 by a stopper block 34. The opening side cable 22a is wound along the guide groove 33a from one side in the axial direction when the drum 33 rotates in a counterclockwise (CCW) manner. The closing side cable 22b is wound along the guide groove 33a from the other side in the axial direction in the case where the drum 33 rotates in a clockwise (CW) manner.

In FIG. 3, on the back side of the drum accommodation chamber 30a, and in the portion (lower part in the figure) closer to an opening side tensioner mechanism 40a and a closing side tensioner mechanism 40b, a substrate accommodation chamber (not shown) is provided. The substrate accommodation chamber accommodates a control substrate that controls the rotation of the drive motor 60 and corresponds to the ECU 50 in FIG. 2. The control substrate is electrically connected to a battery (power source) mounted on the vehicle 10 and an operation switch inside the vehicle compartment, etc., through connector connection parts 35a and 35b.

Here, in response to the "open operation" of the operation switch, the control substrate (ECU 50) rotationally drives the drive motor 60 counterclockwise (CCW). According to this, the output shaft 32 and the drum 33 rotate counterclockwise with high torque, and the opening side cable 22a is wound onto the drum 33 while pulling the sliding door 13. As a result, the sliding door 13 is automatically controlled in the opening direction. At this time, the closing side cable 22b is fed out from the drum 33 to the outside of the case 30.

Similarly, in response to the "close operation" of the operation switch, the control substrate (ECU 50) rotationally drives the drive motor 60 clockwise (CW). According to this, the output shaft 32 and the drum 33 rotate clockwise with high torque, and the closing side cable 22b is wound onto the drum 33 while pulling the sliding door 13. As a result, the sliding door 13 is automatically controlled in the closing direction. At this time, the opening side cable 22a is fed out from the drum 33 to the outside of the case 30. It should be noted that each of the cables 22a and 22b is covered by a flexible outer tube TU in an interval between the inlet and outlet of the drive unit 21 and the reverse pulleys 23a and 23b (see to FIG. 2), and is designed to move outer tube TU.

The case 30 includes an opening side tensioner accommodation chamber 30b and a closing side tensioner accommodation chamber 30c adjacent to the drum accommodation chamber 30a. The opening side tensioner accommodation chamber 30b and the closing side tensioner accommodation chamber 30c accommodate the opening side tensioner mechanism 40a and the closing side tensioner mechanism 40b, respectively, which apply a predetermined tension to the opening side cable 22a and the closing side cable 22b. Each of the opening side tensioner mechanism 40a and the closing side tensioner mechanism 40b includes a pulley 46 that rotates with a pulley shaft 45 serving as the reference, and a coil spring (elastic member) 44 that presses the pulley 46.

The opening side cable 22a is wound around the pulley 46 of the opening side tensioner mechanism 40a and then wound onto the drum 33. Similarly, the closing side cable 22b is wound around the pulley 46 of the closing side tensioner mechanism 40b before being wound onto the drum 33. At this time, the opening side tensioner mechanism 40a and the closing side tensioner mechanism 40b remove slack from the opening side cable 22a and the closing side cable 22b, respectively, by pressing the pulley 46 through using the coil spring 44. For example, each of the cables 22a and 22b may elongate in length through repeatedly pulling the sliding door 13 that is heavy. Each of the tensioner mechanisms 40a and 40b removes the slack associated with such elongation of the cable length.

### <Schematic Configuration around the ECU>

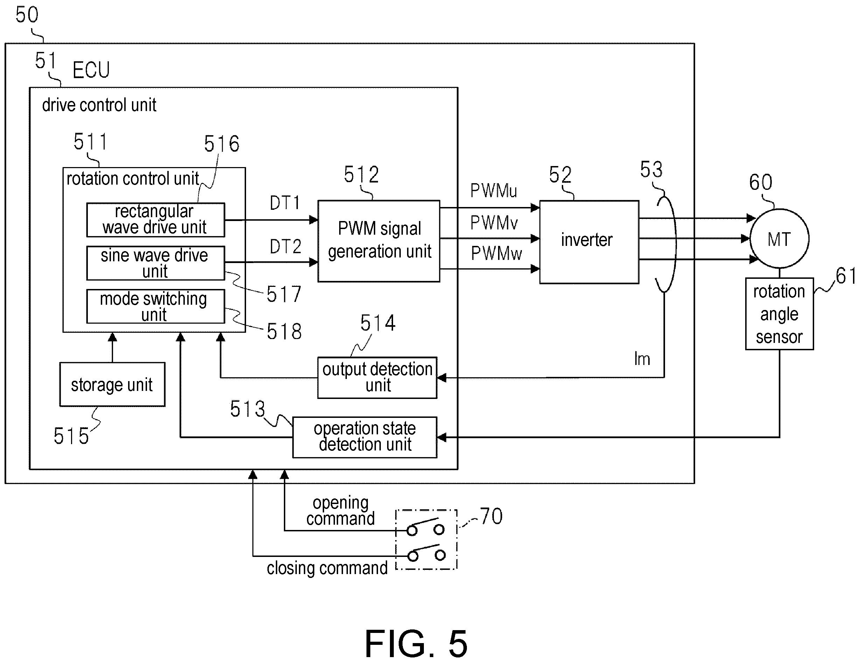

FIG. 5 is a schematic diagram showing an example configuration of the main parts around the ECU in FIG. 2. As shown in FIG. 5, the ECU 50, which is the motor control device of embodiment 1, includes a drive control unit 51, an inverter (motor driver) 52, and a current sensor 53. Additionally, the ECU 50 is connected to an operation switch 70, which is, for example, a switch around the driver's seat of the vehicle 10 or a remote control switch.

The drive control unit 51 controls the rotation of the drive motor 60 by generating a pulse width modulation (PWM) signal to the inverter 52 in accordance with the operation command from the operation switch 70. As will be described in detail later, the drive control unit 51, when controlling the rotation of the drive motor 60, appropriately switches the control mode of the drive motor 60 between a sine wave drive mode and a rectangular wave drive mode.

The sine wave drive mode is a control mode that drives the drive motor 60 by using sine wave control signals. While having inferior torque properties compared to the rectangular wave drive mode, the sine wave drive mode excels in quietness. The rectangular wave drive mode is a control mode that drives the drive motor 60 by using rectangular wave control signals. Although having better torque properties compared to the sine wave drive mode, the rectangular wave drive mode is inferior in terms of quietness. It should be noted that the control of the drive motor 60 by the sine wave drive mode and rectangular wave drive mode belongs to the conventional technologies, so detailed description of such control modes are omitted.

The operation switch 70 issues various commands in response to user operations, including an auto-open command for automatically moving the sliding door 13 to the fully open position, and an auto-close command for automatically moving the sliding door 13 to the fully closed position.

While not shown in the drawings, the inverter 52, includes, for example, six switching elements formed by metal oxide semiconductor field effect transistors (MOFETs) and flyback diodes. The six switching elements generate three-phase drive voltages Vu, Vv, and Vw by switching in response to PWM signals PWMu, PWMv, and PWMw from the drive control unit 51. The drive motor 60, which is a brushless motor MT, is driven by the three-phase drive voltages Vu, Vv, and Vw generated by the inverter 52.

The current sensor 53 is provided at an output terminal of the inverter 52, in other words, at an input terminal part of the drive motor 60, and detects an operating current (also referred to as a phase current, an actual current value, or a load current value) actually flowing through the drive motor 60.

### <Configuration of the Drive Control Unit>

The drive control unit 51 will be described in more detail. The drive control unit 51 is, for example, formed by a microcontroller including a central processing unit (CPU), and is mounted on a control substrate (wiring substrate) forming the ECU 50 together with the inverter 52. However, the drive control unit 51 is not limited to a microcontroller, and a portion or the entirety thereof may be formed by a field programmable gate array (FPGA) or a dedicated hardware component. The drive control unit 51 may be configured with program processing using a CPU, hardware processing using a dedicated hardware component, or a combination thereof.

The drive motor 60 controlled in the drive control unit 51 is typically a 3-phase brushless DC motor that includes a rotor formed by permanent magnets and a stator that generates a magnetic force to rotate the rotor, and includes a rotation angle sensor 61 that detects the rotational position (rotation angle) of the rotor. The rotation angle sensor 61 is typically a Hall IC that generates a 3-phase position detection signal according to the rotational position of the rotor. The rotation angle sensor 61 is not limited to a Hall IC, and may be, for example, a rotary encoder, resolver, or the like.

The drive control unit 51 includes a rotation control unit 511, a PWM signal generation unit 512, an operation state detection unit 513, an output detection unit 514, and a storage unit 515.

The rotation control unit 511, for example, appropriately controls the rotation of the drive motor 60 based on the detection results of the operation state detection unit 513 and the output detection unit 514, so that the moving speed of the sliding door 13 becomes a predetermined speed.

As an example, the rotation control unit 511 obtains a door position based on the detection results from the operation state detection unit 513, and obtains the door target speed by referring to, for example, a speed control map that defines the relationship between the door position of the sliding door 13 and the door target speed. That is, the rotation control unit 511 obtains the target rotation speed of the drive motor 60 that drives the sliding door 13 by referring to the speed control map or the like. The speed control map is, for example, stored in the storage unit 515 in advance.

The rotation control unit 511 calculates a target current by performing, for example, proportional-integral (PI) control based on an error between the obtained door target speed and the door moving speed (actual moving speed) detected by the operation state detection unit 513. More specifically, the rotation control unit 511 calculates a duty ratio command value for the PWM signal by performing PI control or the like based on an error between the target current and the phase currents (coil currents) Iu, Iv, Iw from the current sensor 53, and sends the calculated duty ratio command value to the PWM signal generation unit 512.

The PWM signal generation unit (control signal generation unit) 512 generates a motor control signal for supplying drive power to the drive motor 60. Specifically, the PWM signal generation unit 512 receives the duty ratio command value transmitted from the rotation control unit 511 and generates PWM signals PWMu, PWMv, PWMw that reflect the duty ratio.

The operation state detection unit 513 detects the operation state of the sliding door (opening and closing body) 13 based on the cycle counts, frequencies, phase differences, etc., of the position detection signals Pu, Pv, Pw from the rotation angle sensor 61. The operation state of the sliding door 13 includes, for example, the door position, door moving speed, and door opening/closing direction of the sliding door 13. It should be noted that the operation state of the sliding door 13 also includes the state in which the sliding door 13 is stopped.

In the embodiment, the operation state detection unit 513 detects the operation state of the sliding door 13 based on information such as the rotational position, rotational speed, and rotational direction of the drive motor 60, which are obtained from the measurement results of the rotation angle sensor 61. In this case, the door position is output as a count value of the number of rotations of the drive motor 60. Additionally, it can be said that the operation state detection unit 513 also detects the rotational state of the drive motor 60, such as the rotational speed thereof, for driving the sliding door 13.

The output detection unit 514 detects the output of the drive motor 60 according to the operation state of the sliding door 13, which is the opening and closing body. Specifically, the output detection unit 514 detects the output value of the current sensor 53 as the operating current (also referred to as the phase current, the actual current value, or the load current value) actually flowing through the drive motor 60.

### <Configuration of the Rotation Control Unit>

The configuration of the rotation control unit 511 will be described more specifically. In the embodiment, the rotation control unit 511 includes a rectangular wave drive unit 516, a sine wave drive unit 517, and a mode switching unit 518.

The rectangular wave drive unit 516 drives the drive motor 60 by using the rectangular wave drive mode. The rectangular wave drive unit 516, for example, determines the timing for energizing each phase stator coil of the drive motor 60 (energizing timing) based on the detection results of the output detection unit 514 and the operation state detection unit 513, calculates a duty ratio command value DT1 for rectangular wave drive according to the determined energizing timing, and transmits the duty ratio command value DT1 to the PWM signal generation unit 512.

The sine wave drive unit 517 drives the drive motor 60 by using the sine wave drive mode. The sine wave drive unit 517, for example, determines the timing for energizing each phase stator coil of the drive motor 60 based on the detection results of the output detection unit 514 and the operation state detection unit 513, and transmits a duty ratio command value DT2 for sine wave drive to the PWM signal generation unit 512 according to the determined energizing timing.

The mode switching unit 518 executes a switching process to switch the control mode of the drive motor 60 between the rectangular wave drive mode and the sine wave drive mode as needed. In other words, the mode switching unit 518 switches between driving of the drive motor 60 by the rectangular wave drive unit 516 and driving of the drive motor 60 by the sine wave drive unit 517 as necessary. That is, either the rectangular wave drive unit 516 or the sine wave drive unit 517 transmits a duty ratio command value to the PWM signal generation unit 512 based on instructions from the mode switching unit 518.

The mode switching unit 518 performs the switching between the rectangular wave drive mode and the sine wave drive mode based on a judgment value derived from the output results of the output detection unit 514. More specifically, the mode switching unit 518 compares the judgment value derived from the output results of the output detection unit 514 with a predetermined threshold value, and based on the comparison result, switches the control mode of the drive motor 60.

In addition, in the embodiment, the mode switching unit 518 switches the control mode of the drive motor 60 in the case where the operation state of the drive motor 60 is in the steady-state operation (normal operation) period after the startup operation period. During the startup operation period of the drive motor 60 immediately after the sliding door 13 begins to operate, the drive motor 60 is controlled in the rectangular wave drive mode. Comparatively, during the steady-state operation period of the drive motor 60 after the startup operation period, the drive motor 60 is basically controlled in the sine wave drive mode. In other words, during the startup operation period, the drive motor 60 is controlled in the rectangular wave drive mode, and then, when the drive motor 60 enters the steady-state operation period, the control mode is switched from the rectangular wave drive mode to the sine wave drive mode to control the drive motor 60.

The mode switching unit 518 does not switch the control mode of the drive motor 60 during the startup operation period of the drive motor 60, but when the drive motor 60 enters the steady-state operation period, the mode switching unit 518 switches the control mode of the drive motor 60 as needed. In other words, when the drive motor 60 is in the steady-state operation period, the mode switching unit 518 temporarily switches the control mode of the drive motor 60 from the sine wave drive mode to the rectangular wave drive mode based on the judgment value.

Here, the judgment value in Embodiment 1 is the output duty in the PWM control of the drive motor 60, and the mode switching unit 518 switches the control mode from the sine wave drive mode to the rectangular wave drive mode when the judgment value increases and becomes equal to or greater than a predetermined first judgment threshold while the drive motor 60 is being controlled in the sine wave drive mode. In other words, when the judgment value becomes equal to or greater than the first judgment threshold, the mode switching unit 518 switches the driving of the drive motor 60 by the sine wave drive unit 517 to the driving of the drive motor 60 by the rectangular wave drive unit 516.

Furthermore, after switching the control mode of the drive motor 60 from the sine wave drive mode to the rectangular wave drive mode as described above, the mode switching unit 518 switches the control mode from the rectangular wave drive mode to the sine wave drive mode when the judgment value decreases and becomes less than a second judgment threshold, which is smaller than the first judgment threshold. In other words, during the steady-state operation period, after the control mode of the drive motor 60 has been switched from the sine wave drive mode to the rectangular wave drive mode, when the judgment value becomes less than the second judgment threshold, the mode switching unit 518 performs a process of returning the control mode of the drive motor 60 from the rectangular wave drive mode to the sine wave drive mode. The switching of the control mode of the drive motor 60 by the mode switching unit 518 will be described in more detail later.

According to the configuration of the motor control device 50 of the embodiment as described above, it is possible to control the drive motor 60 more appropriately by suppressing torque insufficiency even during the steady-state operation period of the drive motor 60, and consequently, the sliding door 13, which is an opening and closing body of the vehicle, can be operated more smoothly with the operating sound being suppressed.

### <Example of Motor Control Method>

The following describes an example of a control method for the drive motor 60 by the motor control device 50, particularly an example of a control method for the drive motor 60 during the steady-state operation period.

In the motor control device 50 according to the embodiment, for example, when the operation of the sliding door 13 is initiated by the user's operation on the operation switch 70, the drive motor 60 firstly undergoes the startup operation period driven by the rectangular wave drive mode, and then transitions to the steady-state operation period mainly driven by the sine wave drive mode. Then, the mode switching unit 518 performs the switching of the control mode based on the judgment value after the drive motor 60 has transitioned from the startup operation period to the steady-state operation period, that is, when the drive motor 60 is in the steady-state operation period.

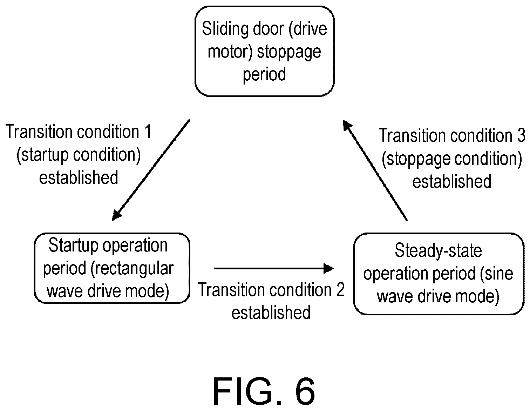

FIG. 6 is a diagram describing the transition between the startup operation period and the steady-state operation period. As shown in FIG. 6, when a transition condition 1 (operation start condition) is established during a stop period in which the drive motor 60 is stopped, the drive motor 60 transitions to the startup operation period, and the drive of the drive motor 60 by the rectangular wave drive mode begins. That is, when the transition condition 1 is established, the drive of the drive motor 60 by the rectangular wave drive unit 516 starts. Accordingly, the opening and closing operation of the sliding door 13 is started. The transition condition 1 for transitioning from the stop period to the startup operation period can be determined as appropriate, but examples may include the user's operation on the operation switch 70.

Then, when a transition condition 2 is established during the startup operation period, the drive motor 60 transitions to the steady-state operation period, and the control mode of the drive motor 60 is switched from the rectangular wave drive mode to the sine wave drive mode. That is, the drive of the drive motor 60 by the rectangular wave drive unit 516 is switched to the drive of the drive motor 60 by the sine wave drive unit 517. The transition condition 2 for transitioning from the startup operation period to the steady-state operation period can also be determined as appropriate, but examples may include the elapsed time from the start of operation of the sliding door 13, the operating speed of the sliding door 13, the door position of the sliding door 13, and the target speed of the sliding door 13.

Subsequently, during the steady-state operation period of the drive motor 60, the mode switching unit 518 performs a process to temporarily switch the control mode of the drive motor 60 from the sine wave drive mode to the rectangular wave drive mode as necessary. Additionally, during the steady-state operation period of the drive motor 60, if a transition condition 3 (operation stop condition) for transitioning from the steady-state operation period to the stop period is established, the sliding door 13 is stopped. In other words, the control of the drive motor 60 by the rotation control unit 511 is terminated. The transition condition 3 can also be determined as appropriate, but examples may include the sliding door 13 reaching the fully open position or the fully closed position.

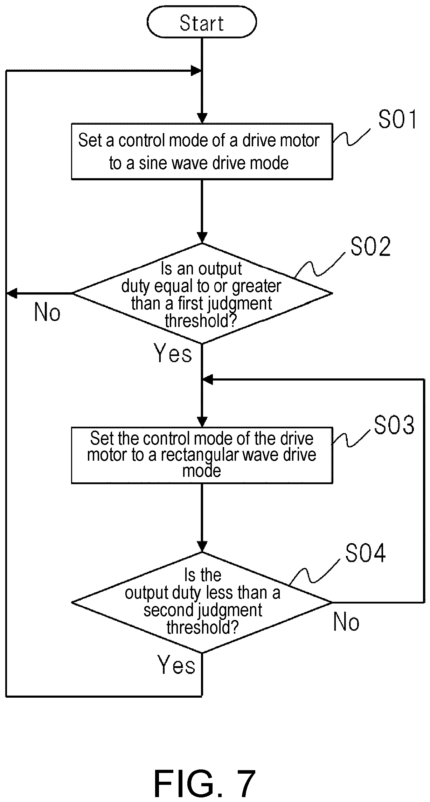

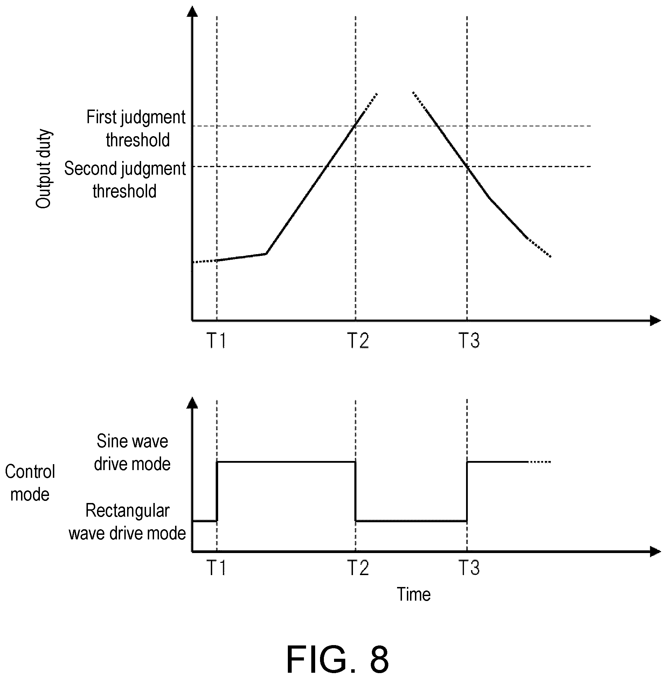

Next, referring to FIG. 7 and FIG. 8, an example of the control method of the drive motor during the steady-state operation period, particularly the switching process of the control mode for the drive motor 60 by the mode switching unit 518, will be described. FIG. 7 is a flowchart explaining an example of the control method in the drive motor control device of Embodiment 1. In addition, FIG. 8 is a diagram schematically showing changes in output duty and the switching state of the control mode.

As mentioned above, when the operation state of the drive motor 60 transitions from the startup operation period to the steady-state operation period, as shown in FIG. 7, firstly in Step S01, the rotation control unit 511 sets the control mode of the drive motor 60 to the sine wave drive mode. In the embodiment, while the drive motor 60 is in the startup operation period, the control mode of the drive motor 60 is set to the rectangular wave drive mode. Then, when the operation state of the drive motor 60 transitions from the startup operation period to the steady-state operation period, the mode switching unit 518 switches the control mode of the drive motor 60 from the rectangular wave drive mode to the sine wave drive mode. In other words, the mode switching unit 518 switches the drive of the drive motor 60 from the rectangular wave control unit 517 to the sine wave drive unit 517. In the example shown in FIG. 8, at the timing of a time T1, the mode switching unit 518 switches the control mode of the drive motor 60 from the rectangular wave drive mode to the sine wave drive mode.

Then, in the state where the drive motor 60 is driven in the sine wave drive mode, the mode switching unit 518 determines whether the output duty in the PWM control of the drive motor 60 has increased to be equal to or greater than a first judgment threshold (Step S02). The timing for making this determination is not particularly limited and can be set as needed, but for example, the timing can be set at a constant interval.

Then, in the case where the mode switching unit 518 determines that the output duty, which is the judgment value, is less than the first judgment threshold (Step S02: No), the flow returns to Step S01 and continues driving the drive motor 60 using the sine wave drive mode. On the other hand, in the case where the output duty is determined to be equal to or greater than the first judgment threshold (Step S02: Yes), the flow proceeds to Step S03 and sets the control mode of the drive motor 60 to the rectangular wave drive mode. In other words, the flow switches the control mode of the drive motor 60 from the sine wave drive mode to the rectangular wave drive mode. In the example of FIG. 8, between times T1 and T2, the drive motor 60 continues to be driven by the sine wave drive mode, and when the output duty reaches the first judgment threshold at the time T2, the control mode of the drive motor 60 is switched from the sine wave drive mode to the rectangular wave drive mode.

In this way, during the steady-state operation period of the drive motor 60, by appropriately switching the control mode of the drive motor 60 from the sine wave drive mode to the rectangular wave drive mode, torque insufficiency can be suppressed, and consequently, the sliding door 13 can be operated more smoothly.

It should be noted that the first judgment threshold of the output duty, which serves as the judgment criteria for switching the control mode from the sine wave drive mode to the rectangular wave drive mode, can be determined as appropriate, but the first judgment threshold is preferably set to about 70%.

Subsequently, while the drive motor 60 is controlled in the rectangular wave drive mode, the mode switching unit 518 determines whether the output duty of the drive motor 60 has decreased to be less than a second judgment threshold (Step S04). The timing for making this determination is not particularly limited and can be set as needed, but for example, the timing can be set at a constant interval. Additionally, it is preferable that the second judgment threshold is set to a value smaller than the first judgment threshold. For example, it is preferable that the second judgment threshold of the output duty is set to about 60%.

Then, in the case where the mode switching unit 518 determines that the output duty is equal to or greater than the second judgment threshold (Step S04: No), the flow proceeds to Step S03 and continues driving the drive motor 60 by using the rectangular wave drive mode. On the other hand, in the case where the mode switching unit 518 determines that the output duty is less than the second judgment threshold (step S04: Yes), the flow proceeds to Step S01 and sets the control mode of the drive motor 60 to the sine wave drive mode. In other words, the flow switches the control mode of the drive motor 60 from the rectangular wave drive mode to the sine wave drive mode. In the example shown in FIG. 8, when the output duty at a time T3 decreases to be less than the second judgment threshold, the control mode of the drive motor 60 is switched from the rectangular wave drive mode to the sine wave drive mode.

As described above, in the embodiment, during the steady-state operation period of the drive motor 60, the drive motor 60 is mainly driven by using the sine wave drive mode, and for example, according to the output duty of the drive motor 60, the control mode of the drive motor 60 is temporarily switched from the sine wave drive mode to the rectangular wave drive mode. Accordingly, the output torque of the drive motor 60 can be temporarily increased at an appropriate timing. As a result, it becomes possible to operate the sliding door 13 more smoothly while suppressing the operating sound.

It should be noted that in the example, the second judgment threshold was set to a value smaller than the first judgment threshold, but the second judgment threshold is not particularly limited and may be set to the same value as the first judgment threshold.

Furthermore, the second judgment threshold may be set to a value greater than the first judgment threshold. Then, in the state where the drive motor 60 is driven in the rectangular wave drive mode, if the output duty increases to be equal to or greater than the second judgment threshold (> first judgment threshold), and subsequently, when the output duty becomes less than the second judgment threshold, the control mode may be returned to the sine wave drive mode. Accordingly, the control mode that has been switched to the rectangular wave drive mode is returned to the sine wave drive mode relatively early.

However, in such case, it is considered that the output duty may increase again without decreasing to less than the first judgment threshold. At this time, it is preferable to switch the control mode of the drive motor 60 from the sine wave drive mode to the rectangular wave drive mode again. For example, after the output duty decreases to be less than the second judgment threshold (> first judgment threshold), if the output duty increases again to be equal to or greater than the second judgment threshold, the drive mode of the drive motor 60 may be switched from the sine wave drive mode to the rectangular wave drive mode.

### (Embodiment 2)

While Embodiment 1 describes an example using the output duty of the drive motor 60 as the judgment value, Embodiment 2 is an example using the control speed ratio of the drive motor 60 as the judgment value. The control speed ratio of the drive motor 60 described herein is the ratio of the control speed (actual speed) to the target speed of the drive motor 60. The target speed of the drive motor 60 (target speed of the sliding door 13) is stored in the storage unit 515 as a speed control map, as mentioned above. The device configuration is the same as in Embodiment 1, so the description is omitted.

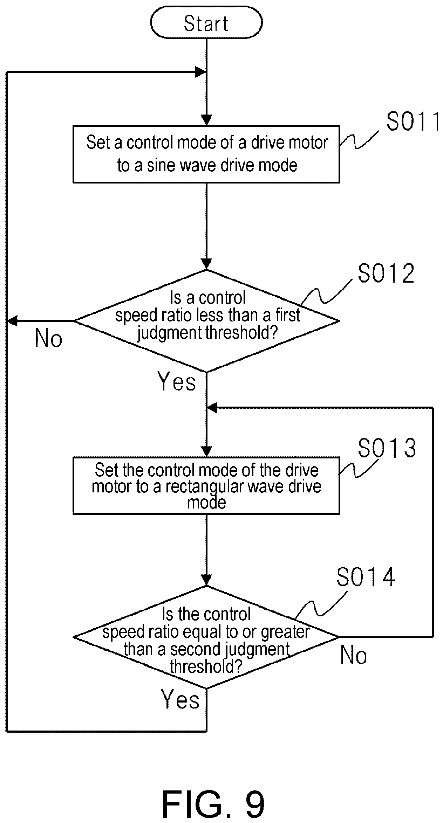

The following description refers to FIG. 9 to describe an example of the control method in the motor control device of Embodiment 2, particularly the switching process of the control mode for the drive motor 60 by the mode switching unit 518.

When the operation state of the drive motor 60 transitions from the startup operation period to the steady-state operation period, as shown in FIG. 9, firstly in Step S011, the rotation control unit 511 sets the control mode of the drive motor 60 to the sine wave drive mode. In other words, the drive of the drive motor 60 by the rectangular wave drive unit 516 is switched to the drive of the drive motor 60 by the sine wave drive unit 517.

Subsequently, in the state where the drive motor 60 is driven in the sine wave drive mode, the mode switching unit 518 determines whether the control speed ratio of the drive motor 60 is less than the first judgment threshold (Step S02). The timing for making this determination is not particularly limited and can be set as needed, but for example, the timing can be set at a constant interval.

Then, if the mode switching unit 518 determines that the control speed ratio is equal to or greater than the first judgment threshold (Step S012: No), the flow returns to step S011 and continues driving the drive motor 60 in the sine wave drive mode. In other words, in the case where it is determined that the deviation between the control speed and the target speed is small (Step S012: No), the driving of the drive motor 60 in the sine wave drive mode continues.

On the other hand, if it is determined that the control speed ratio is less than the first judgment threshold (Step S012: Yes), the flow proceeds to Step S013, and the control mode of the drive motor 60 is switched from the sine wave drive mode to the rectangular wave drive mode. In other words, in the case where it is determined that the deviation between the control speed and the target speed is large (Step S012: Yes), the control mode of the drive motor 60 is switched from the sine wave drive mode to the rectangular wave drive mode.

By switching the control mode of the drive motor 60 from the sine wave drive mode to the rectangular wave drive mode during the steady-state operation period of the drive motor 60, the output torque of the drive motor 60 can be increased, making it easier to bring the control speed close to the target speed. In other words, it is possible to suppress torque insufficiency of the drive motor 60. As a result, the sliding door 13 can be operated more smoothly.

The first judgment threshold of the control speed ratio, which serves as the judgment criteria for switching the control mode from the sine wave drive mode to the rectangular wave drive mode, can be determined as appropriate, but the first judgment threshold is preferably set to about 60%. The first judgment threshold is a general term for the threshold that serves as the judgment criteria for switching the control mode from the sine wave drive mode to the rectangular wave drive mode. Therefore, for example, the first judgment threshold of the output duty described in in Embodiment 1 and the first judgment threshold of the control speed ratio have different values.

Subsequently, in the state where the drive motor 60 is controlled in the rectangular wave drive mode, the mode switching unit 518 determines whether the speed control ratio of the drive motor 60 has become equal to or greater than the second judgment threshold (Step S014). The timing for making this determination is not particularly limited and can be set as needed, but for example, the timing can be set at a constant interval. Additionally, it is preferable that the second judgment threshold is set to a value greater than the first judgment threshold. As an example, it is preferable that the second judgment threshold of the control speed ratio is set to about 80%.

The second judgment threshold is a general term for the threshold that serves as the judgment criteria for switching the control mode of the drive motor 60 from the rectangular wave drive mode to the sine wave drive mode. Therefore, the second judgment threshold of the output duty described in Embodiment 1 and the second judgment threshold of the control speed ratio have different values.

Then, in the case where the mode switching unit 518 determines that the control speed ratio is less than the second judgment threshold (step S014: No), the flow proceeds to step S013 and continues driving the drive motor 60 using the rectangular wave drive mode. On the other hand, in the case where it is determined that the control speed ratio is equal to or greater than the second judgment threshold (Step S014: Yes), the flow proceeds to Step S011 and sets the control mode of the drive motor 60 to the sine wave drive mode. In other words, the flow switches the control mode of the drive motor 60 from the rectangular wave drive mode to the sine wave drive mode.

As described above, even to switch the control mode of the drive motor 60 between the sine wave drive mode and the rectangular wave drive mode by using the control speed ratio as the judgment value, it is possible to temporarily increase the output torque of the drive motor 60 at an appropriate timing, similar to Embodiment 1. As a result, it becomes possible to operate the sliding door 13 more smoothly while suppressing the operating sound.

### (Embodiment 3)

Embodiment 3 is, like Embodiment 2, a modification example of the judgment value. While Embodiment 2 describes an example using the control speed ratio of the drive motor 60 as the judgment value, Embodiment 3 is an example using a deviation (hereinafter referred to as a speed deviation of the drive motor 60) between the target speed and the control speed of the drive motor 60 as the judgment value.

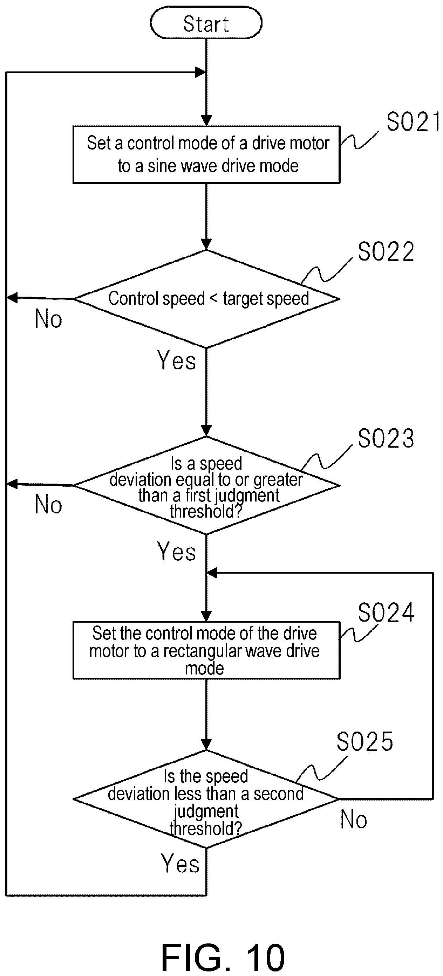

The following description refers to FIG. 10 to describe an example of the control method in the motor control device of Embodiment 3, particularly the switching process of the control mode for the drive motor 60 by the mode switching unit 518.

When the operation state of the drive motor 60 transitions from the startup operation period to the steady-state operation period, as shown in FIG. 10, similar to the above embodiments, the rotation control unit 511 firstly sets the control mode of the drive motor 60 to the sine wave control mode (step S021). That is, the driving of the drive motor 60 by the rectangular wave drive unit 517 is switched to the driving of the drive motor 60 by the sine wave drive unit 517.

Next, in the state where the drive motor 60 is being driven by the sine wave drive mode, the mode switching unit 518 determines whether the control speed (actual speed) of the drive motor 60 is less than the target speed (Step S022). Here, in the case where it is determined that the control speed of the drive motor 60 is equal to or greater than the target speed (Step S022: No), the process returns to Step S021 and continues driving the drive motor 60 using the sine wave drive mode.

On the other hand, in the case where it is determined that the control speed of the drive motor 60 is less than the target speed (Step S022: Yes), the process proceeds to step S023, where it is determined whether the speed deviation of the drive motor 60 is equal to or greater than a first judgment threshold. The timing for making this determination is not particularly limited and can be set as needed, but for example, the timing can be set at a constant interval.

Then, if the mode switching unit 518 determines that the speed deviation is less than the first judgment threshold (Step S023: No), the flow returns to Step S021 and continues driving the drive motor 60 by using the sine wave drive mode. In other words, if it is determined that the deviation of the control speed from the target speed is small (Step S023: No), the drive motor 60 continues to be driven using the sine wave drive mode.

Furthermore, if it is determined that the speed deviation is equal to or greater than the first judgment threshold (Step S23: Yes), the process proceeds to Step S024, where the control mode of the drive motor 60 is switched from the sine wave drive mode to the rectangular wave drive mode. In other words, in the case where it is determined that the negative deviation of the control speed from the target speed is large, that is, if it is determined that the actual speed is significantly slower than the target speed (Step S023: Yes), the process proceeds to Step S024, where the control mode of the drive motor 60 is switched from the sine wave drive mode to the rectangular wave drive mode. The first judgment threshold for the speed deviation can be determined as appropriate, but it is preferably set to around -30 [mm/s].

By switching the control mode of the drive motor 60 from the sine wave drive mode to the rectangular wave drive mode during the steady-state operation period of the drive motor 60, the output torque of the drive motor 60 can be increased. Therefore, even in the case where there is a large deviation between the control speed and the target speed of the drive motor 60, it becomes easier to suppress torque insufficiency of the drive motor 60 and bring the control speed close to the target speed. As a result, the sliding door 13 can be operated more smoothly.

Subsequently, while the drive motor 60 is being controlled in the rectangular wave drive mode, the mode switching unit 518 determines whether the speed deviation of the drive motor 60 has become less than the second judgment threshold (Step S025). The timing for making this determination is not particularly limited and can be set as needed, but for example, the timing can be set at a constant interval.

It is preferable that the second judgment threshold is set to a value smaller than the first judgment threshold. As an example, the second judgment threshold for the speed deviation is preferably set to around -20 [mm/s].

Then, in the case where the mode switching unit 518 determines that the speed deviation of the drive motor 60 is equal to or greater than the second judgment threshold (Step S025: No), the flow proceeds to Step S024 and continues driving the drive motor 60 by using the rectangular wave drive mode. On the other hand, in the case where it is determined that the speed deviation of the drive motor 60 is less than the second judgment threshold (Step S025: Yes), the flow proceeds to Step S021 and sets the control mode of the drive motor 60 to the sine wave control mode. In other words, the flow switches the control mode of the drive motor 60 from the rectangular wave drive mode to the sine wave drive mode.

As described above, even to switch the control mode of the drive motor 60 between the sine wave drive mode and the rectangular wave drive mode by using the speed deviation as the judgment value, it is possible to temporarily increase the output torque of the drive motor 60 at an appropriate timing, similar to Embodiments 1 and 2. As a result, it becomes possible to operate the sliding door 13 more smoothly while suppressing the operating sound.

### (Embodiment 4)

Embodiment 4 is, like Embodiment 3, a modification example of the judgment value. While Embodiment 4 describes an example using the speed deviation of the drive motor 60 as the judgment value, Embodiment 4 is an example that uses the door position of the sliding door 13 operated by the drive motor 60 as the judgment value (judgment condition).

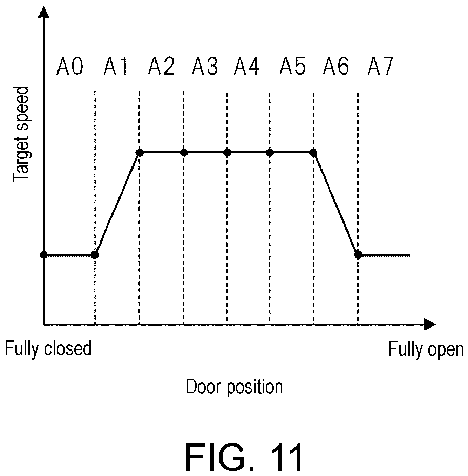

FIG. 11 is a diagram showing an example of a relationship between the door position of the sliding door and a target speed. In the example shown in FIG. 11, the moving area of the sliding door 13, that is, the moving area from the fully closed position to the fully open position of the sliding door 13, is divided into eight control areas A0 to A7. As an example, each of the control areas A0 to A7 is a region with a different slope of the target speed, and within each of the control areas A0 to A7, the slope of the target speed is approximately constant. In other words, the boundaries of each control area A0 to A7 are set at the points of change where the slope of the target speed changes. Then, the mode switching unit 518 according to Embodiment 4 switches the control mode of the drive motor 60 between the rectangular wave drive mode and the sine wave drive mode depending on which of the control areas A0 to A7 the door position of the sliding door 13 is in.

In the example, the door position of the sliding door 13 is determined based on the detection result of the operation state detection unit 513, that is, the measurement result of the rotation angle sensor 61. Additionally, the drive mode of the drive motor 60 in each of the control areas (operating areas) A0 to A7 is determined in advance. As an example, the storage unit 515 stores a table or the like that defines the control modes of the drive motor 60 in the control areas (operating areas) A0 to A7 of the sliding door 13.

The mode switching unit 518 refers to the table or the like stored in the storage unit 515 and appropriately switches the control mode of the drive motor 60 according to the control areas A0 to A7. The control mode of the drive motor 60 in each of the control areas A0 to A7 may be different when the sliding door 13 moves in the opening direction and when the sliding door 13 moves in the closing direction.

In this way, by switching the drive mode of the drive motor 60 according to the control areas A0 to A7 of the sliding door 13, it is possible to temporarily increase the output torque of the drive motor 60 at an appropriate timing, similar to the above embodiments. As a result, it becomes possible to operate the sliding door 13 more smoothly while suppressing the operating sound.

In this example, a case where the moving area of the sliding door 13 is divided into eight control areas has been described. However, the number of control areas is not particularly limited, and may be seven or less, or nine or more.

While an embodiment of the technology of the disclosure has been described above, it goes without saying that the technology of the disclosure is not limited to the above-described embodiment and can be variously modified within a range that does not deviate from its essence. In addition, the material, shape, dimensions, number, installation location, etc., of each component in the above-described embodiment are arbitrary as long as they can achieve the technology of the disclosure, and are not particularly limited.

For example, in the above embodiments, the sliding door is described as an example of the opening and closing body. However, the opening and closing body may be, for instance, a tailgate or a sunroof. The motor control device of the disclosure can be applied to the control of drive motors that drive various opening and closing bodies.

### [Reference Signs List]

10: Vehicle; 11: Vehicle body; 13: Sliding door (opening and closing body); 20: Power sliding door device (vehicle opening and closing body control device); 21: Drive unit; 30: Case; 50: Motor control unit (ECU); 51: Drive control unit; 52: Inverter (motor driver) 53: Current sensor; 60: Drive motor; 61: Rotation angle sensor; 70: Operation switch; 511: Rotation control unit; 512: PWM signal generation unit (control signal generation unit); 513: Operation state detection unit; 514: Output detection unit; 515: Storage unit; 516: Rectangular wave drive unit; 517: Sine wave drive unit; 518: Mode switching unit.

## Claims

1. A motor control device (50), controlling a drive motor (60) connected with an opening and closing body (13) of a vehicle (10) and provided for automatically opening and closing the opening and closing body (13), the motor control device (50) comprising:
an output detection unit (514), detecting an output of the drive motor (60) in accordance with an operation state of the opening and closing body (13); and
a mode switching unit (518), switching a control mode of the drive motor (60) to a sine wave drive mode or a rectangular wave drive mode based on a judgment value obtained from an output result obtained by the output detection unit (514).

2. The motor control device (50) as claimed in claim 1, wherein the mode switching unit (518) switches the control mode during a steady-state operation period after a startup operation period of the drive motor (60).

3. The motor control device (50) as claimed in claim 1, wherein the judgment value is an output duty of the drive motor (60), and
the mode switching unit (518) switches the control mode from the sine wave drive mode to the rectangular wave drive mode when the judgment value increases and becomes equal to or greater than a first judgment threshold set in advance while the drive motor (60) is being controlled in the sine wave drive mode.

4. The motor control device (50) as claimed in claim 3, wherein, after switching the control mode from the sine wave drive mode to the rectangular wave drive mode, the mode switching unit (518) switches from the rectangular wave drive mode to the sine wave drive mode when the judgment value decreases and becomes less than a second judgment threshold smaller than the first judgment threshold.

5. The motor control device (50) as claimed in claim 1, wherein the judgment value is a deviation between a target speed and a control speed of the drive motor (60), and
the mode switching unit (518) switches the control mode from the sine wave drive mode to the rectangular wave drive mode when the judgment value increases and becomes equal to or greater than a first judgment threshold set in advance in a state where the control speed of the drive motor (60) is slower than the target speed while the drive motor (60) is being controlled in the sine wave drive mode.

6. The motor control device (50) as claimed in claim 1, wherein the judgment value is a ratio of a control speed with respect to a target speed of the drive motor (60), and
the mode switching unit (518) switches the control mode from the sine wave drive mode to the rectangular wave drive mode when the judgment value decreases and becomes less than a first judgment threshold set in advance while the drive motor (60) is being controlled in the sine wave drive mode.

7. The motor control device (50) as claimed in claim 1, comprising:
an operation state detection unit (513), detecting the operation state of the opening and closing body (13),
wherein the operation state detection unit (513) detects in which of a plurality of control areas (A0 to A7) set in an operation area of the opening and closing body (13) the opening and closing body (13) is located, and
the mode switching unit (518) switches the control mode in a case where the opening and closing body (13) is located at a specific control area set in advance.
